**Europäisches Patentamt**

**European Patent Office**

**Office européen des brevets**

(19)

(11) Veröffentlichungsnummer : **0 379 707 B1**

(12)

# EUROPÄISCHE PATENTSCHRIFT

(45) Veröffentlichungstag der Patentschrift :
**04.11.92 Patentblatt 92/45**

(51) Int. Cl.⁵ : **E21B 7/28,** E21B 7/26,
E21B 7/20, E21B 29/00,
// F16L1/00, E03F3/06

(21) Anmeldenummer : **89123507.9**

(22) Anmeldetag : **20.12.89**

(54) **Pneumatisches Rohraufweitungsgerät.**

(30) Priorität : **25.01.89 DE 3902081**

(43) Veröffentlichungstag der Anmeldung :
**01.08.90 Patentblatt 90/31**

(45) Bekanntmachung des Hinweises auf die
Patenterteilung :
**04.11.92 Patentblatt 92/45**

(84) Benannte Vertragsstaaten :
**AT BE CH ES FR GB GR IT LI LU NL SE**

(56) Entgegenhaltungen :
**EP-A- 0 053 480
EP-A- 0 216 100
DE-C- 3 815 232**

(56) Entgegenhaltungen :
**DE-C- 3 902 081
DE-C- 3 903 864
GB-A- 2 183 777
US-A- 3 181 302**

(73) Patentinhaber : **Hans Brochier GmbH & Co
Martha Strasse 16
W-8500 Nürnberg (DE)**

(72) Erfinder : **Zimmermann, Heinz, Dipl.-Ing.
Im Harl 12
F-8133 Feldafing (DE)**

(74) Vertreter : **Patentanwälte Czowalla .
Matschkur + Partner
Dr.-Kurt-Schumacher-Strasse 23 Postfach
9109
W-8500 Nürnberg 11 (DE)**

## Beschreibung

Die Erfindung bezieht sich auf ein pneumatisches Rohraufweitungsgerät zum Aufbrechen und Verdrücken alter Metallrohre ins umgebende Erdreich in Form eines durch das Altrohr zu ziehenden, mit einer konischen Spitze und einem vorlaufend angeordneten Rohrschneidegerät mit wenigstens einer Schneide versehenen, zylindrischen Bodenverdrängungshammers, mit vibrierend schlagendem Meißelkopf und einer rückwärtigen Halterungsvorrichtung für ein einzuziehendes Schutzrohr oder ein neues Versorgungsrohr.

Bei einem in der Europäischen Patentschrift 0053 480 beschriebenen Rohraufweitungsgerät der vorstehend beschriebenen Art sind die Messer unmittelbar auf der Oberfläche der konischen Spitze des Bodenverdrängungshammers angeordnet, was in der Praxis aber eine Reihe von Schwierigkeiten mit sich bringt. Die erste Schwierigkeit besteht darin, daß derartige auf der Oberfläche montierte Messer nur sehr schwer austauschbar sind, wenn sie - was bei den rauhen Betriebsbedingungen sehr rasch der Fall ist - stumpf geworden oder ausgebrochen sind. Die darüber hinaus dort vorgesehene schwenkbar und damit auch leichter auswechselbare Halterung der Messer ist in der Praxis aber völlig ungeeignet, da solche schwenkbaren Messer niemals eine sinnvolle Abstützung in der nach außen geschwenkten Betriebsstellung erreichen können, die den tatsächlichen Betriebsbedingungen gewachsen ist.

Wesentlich schwerwiegender ist das Problem, welches die Integrierung der Schneiden in den Bodenverdrängungshammer im Hinblick auf das Aufbrechen von gekrümmten oder abgeknickten Altrohren aufwirft. Bei Kurven im Rohr oder Abknickungen in den Fugen besteht angesichts der recht großen Länge des Bodenverdrängungshammers mit den integrierten Schneiden die Gefahr, daß der Raketenkopf aus der Trasse läuft und - unabhängig vom Zugseil. durch den pneumatischen Vortrieb - über den Hammerkopf quasi geradeaus weiterfährt und damit völlig aus der Bahn gerät.

Eine befriedigende Lösung des Problems, auch unter ungünstigen Betriebsbedingungen, das heißt in Kurven, bei Abknickungen und im Bereich verstärkter Muffen ein sicheres Aufreißen und Verdrängen der Altleitung zu erreichen kann auch nicht mit Hilfe eines in der US-Patentschrift 3,181,302 beschriebenen Rohraufweitungsgeräts erreicht werden. Bei diesem ist vorlaufend zum Aufweitungsabschnitt, an den die neue Rohrleitung angehängt ist, eine Schneidvorrichtung in Form eines langgestreckten Trägers mit einer Vielzahl von Schneidrollen vorgesehen, wobei diese Schneidrollen abwechselnd nach unten oder oben versetzt angeordnet sind, um beim Durchziehen durch die alte Rohrleitung diese möglichst in zwei Hälften aufzuschneiden. Neben der Schwierigkeit, daß durch die sehr lange Schneidanordnung wiederum das Problem der Einsetzbarkeit und Verfahrbarkeit in Kurven und bei Abknickungen gegeben ist, läßt sich aufgrund der Verbindung des Schneidgeräts mit dem Aufweitungsabschnitt über einen Kabelabschnitt, der nur eine zugfeste Verbindung gewährleistet, keine Rangunterstützung mit Hilfe eines vibrierenden Meißelkopfes zum Vortrieb des Rohraufweitungsgeräts und zum Aufbrechen der Altleitung einsetzen.

Der Erfindung liegt daher die Aufgabe zugrunde, ein pneumatisches Rohraufweitungsgerät der eingangs genannten Art so auszugestalten, daß bei einfachem Aufbau, leichter Auswechselbarkeit der Messer und leichter Anpassung an unterschiedliche Rohrdurchmesser ein Gerät zur Verfügung steht, welches auch in gekrümmten und abgeknickten Altrohren eingesetzt werden kann.

Zur Lösung dieser Aufgabe ist erfindungsgemäß vorgesehen, daß das Schneidgerät als gegenüber dem Bodenverdrängungshammer verkürzter zylindrischer, die Schneiden tragender Schneidekaliber ausgebildet ist, dessen Durchmesser kleiner ist als der Durchmesser des Aufweitungsabschnitts und der über eine zug- und druckfeste Gelenkverbindung mit der konischen Spitze des Bodenverdrängungshammers verbunden ist.

Durch die erfindungsgemäße zug- und druckfeste Gelenkverbindung, die bevorzugt als Kardangelenk ausgebildet ist, so daß Rohrabknickungen in allen Richtungen abgefangen werden können, wird die Vortriebskraft des vibrierend schlagenden Meißelkopfs voll auf die Schneiden übertragen. Andererseits aber ist die Schneidenanordnung ein relativ kurzes und damit auch Rohrbiegungen und -abknickungen leicht folgendes Bauteil, so daß in Verbindung mit dem daran angebrachten Zugseil beim Aufbrechen der Altleitung die Schneidenvorrichtung tatsächlich auch dem gekrümmten oder abgeknickten Rohrverlauf folgt und nicht tangential aus der Rohrtrasse herausfahren kann, wie es der Fall ist, wenn ein sehr langer Bodenverdrängungshammer an einer solchen Krümmungs- oder Abknickstelle ankommt und die Schneiden direkt am konischen Kopf des Meißels angeordnet sind.

In der einfachsten Ausführungsform kann der Schneidekaliber mit einer rückwärtigen Platte in einen von einem Spannstift durchsetzten Schlitz der konischen Spitze des Bodenverdrängungshammers einragen, wobei die Aufnahmebohrung der Platte für Spannstift bevorzugt etwas größer ist als der Durchmesser des Spannstiftes, so daß insgesamt eine Verschränkung auch um eine Achse senkrecht zum Spannstift möglich ist und somit im Endeffekt eine kardanische Gelenkverbindung erzielt ist, die für die speziellen Anwendungszwecke völlig ausreicht.

Durch die bevorzugte Ausbildung der Schneiden dadurch, daß eine einen Schlitz des Schneidekalibers durchsetzende, mittels Querspannstiften im Schneidkaliber verankerte Messerplatte vorgesehen ist, läßt sich die Messerplatte auch sehr leicht auswechseln und durch Messerplatten mit anderen Schneiden, Schneidenkonfigurationen und Größen ebenso leicht austauschen, wie ein Messeraustausch auch zur Auswechslung beschädigter oder stumpf gewordener Schneiden sehr leicht möglich ist.

Ein weiterer Vorteil der erfindungsgemäßen Anordnung, bei der der Schneidkaliber zweckmäßigerweise eine konische mit einem Schlitz und Zugseilquerbolzen versehene Führungsspitze aufweisen sollte besteht darin, daß das Aufschneiden des Altrohrs und die Verdrängung der dabei gebildeten Bruchstücke - in der Praxis wird das Altrohr nie in zwei Hälften aufgeschnitten, sondern durch das Aufschneiden erfolgt entweder sofort oder nach einem einseitigen Aufreißen durch die konische Spitze des Bodenverdrängungshammers ein Zerbrechen des Altrohrs in mehrere Bruchstücke, die ins Erdreich verdrängt werden - nicht gleichzeitig stattfindet, wie es der Fall ist, wenn die Messer auf dem konischen Aufweitungsabschnitt angeordnet sind, sondern diese Bereiche sind voneinander getrennt, so daß insbesondere bei verstärkten Muffen, an denen das Aufschneiden Probleme bereitet, nicht die Gefahr besteht, daß bereits bei unvollständig aufgeschnittener Leitung diese in Kontakt mit der konischen Aufweitfläche des Bodenverdrängungshammerkopfes gerät und dann die Spitze sich völlig festkeilt und das Gerät dann mühsam durch Aufgraben wieder geborgen werden muß.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

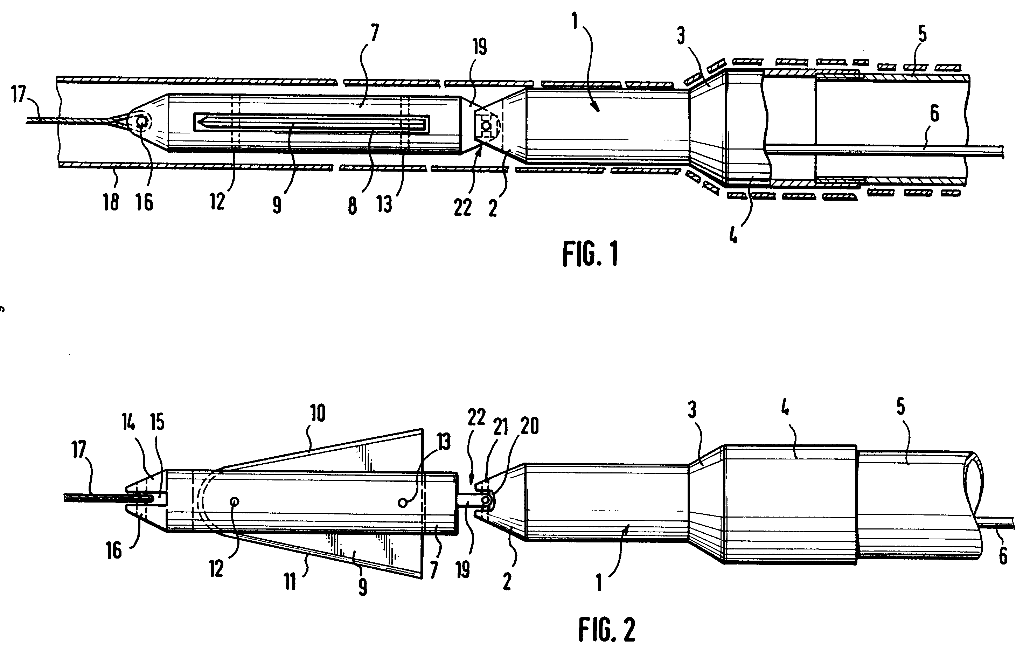

Figur 1 eine schematische Ansicht des Einsatzes und der Arbeitsweise eines erfindungsgemäßen Rohraufweitungsgeräts beim Aufbrechen und Verdrängen einer Altleitung ins Erdreich

Figur 2 eine um 90° versetzte Ansicht des Rohraufweitungsgeräts nach Figur 1.

Das gezeigte Rohraufweitungsgerät umfaßt einen Bodenverdrängungshammer 1 mit einer konischen Spitze 2, der über einen Aufweitungskonus 3 in den im Durchmesser verbreiterten rückwärtigen Abschnitt 4 übergeht, an welchem ein neues Versorgungsrohr 5 oder aber auch ein Schutzrohr für ein solches nachträglich einzuziehendes neues Versorgungsrohr angehängt ist. Im Innern des Bodenverdrängungshammers ist ein vibrierend schlagender Meißelkopf vorgesehen, der durch einen Druckluftschlauch 6 von einer Druckluftquelle versogt wird, die im Bereich der Startbaugrube angeordnet ist. Mit Hilfe einer zug- und druckfesten Gelenkverbindung ist an der Spitze 2 des Bodenverdrängungshammers 1 ein Schneidgerät, in Form eines zylindrischen Schneidekalibers 7, mit einem Querschlitz 8 angeordnet, in welchem ein im wesentlichen V-förmiges ausgebildetes Messer 9 mit Schneiden 10 und 11 mit Hilfe zweier Querspannstifte 12, 13 befestigt ist. An der konischen Führungsspitze 14 des Schneidekalibers ist in einem Querschlitz 15 mit Zugseilquerbolzen 16 ein an sich bekanntes Zugseil 17 befestigt, mit Hilfe dessen durch eine Winde in der Zielbaugrube das Rohraufweitungsgerät zusätzlich zum Vortrieb über den vibrierend schlagenden Meißelkopf durch die Rohrleitung gezogen wird. Das Zugseil 17 bewirkt dabei im wesentlichen nur den Vortrieb durch die Rohrleitung selbst, entgegen den Reibungskräften, während die eigentliche Kraft zum Aufbrechen und verdrängen des Altrohrs 18 vom vibrierend schlagenden Meißelkopf aufgebracht wird.

Die zug- und druckfeste Verbindung der Schneidvorrichtung mit dem Bodenverdrängungshammer erfolgt über eine rückwärtige Platte 19 des Schneidekalibers 7, die in einen Schlitz 20 der Spitze 2 des Bodenverdrängungshammers eingreifen, durch einen Spannstift 21 gelenkig gehalten ist. Durch etwas größere Ausbildung der Bohrung der Platte 19 für den Spannstift 21 bzw. durch - wie dargestellt - Vorsehen einer zweiten senkrecht zum Spannstift 21 angeordneten weiteren Schwenkstift ist die zug- und druckfeste Gelenkverbindung 22 zwischen dem Schneidekaliber 7 und dem Bodenverdrängungshammer 1 als Kardangelenk ausgebildet, so daß Abwinklungen des Schneidekalibers mit der Schneidplatte 9 in alle Richtungen möglich sind.

Damit ist gewährleistet, daß auch bei Rohrkrümmungen und Abknickungen des Rohrs in Fugen die Schneidvorrichtung dem abgewinkelten Rohrverlauf folgen kann und damit dann auch den Bodenverdrängungshammer in die geänderte Bahnkurve zwingt, im Gegensatz zu Anordnungen, bei denen die Schneiden unmittelbar auf den konischen Aufweitungsabschnitt des in sich starren Bodenverdrängungshammers angeordnet sind.

Die Erfindung ist nicht auf das dargestellte Ausführungsbeispiel beschränkt. So wäre es neben einer anderen Anordnung der zug- und druckfesten Gelenkverbindung zwischen Schneidekaliber 7 und Bodenverdrängungshammer 1 auch möglich, andere Ausbildungen des Messers 9 sowie auch gegebenenfalls das Vorsehen mehrerer Messer am Schneidekaliber vorzusehen, da ja selbst bei starrer Anordnung der Messer am Schneidekaliber infolge des relativ einfachen Bauteils, welches diese Schneidekaliber darstellt, ein Auswechseln gegen andere Schneidekaliber in der Praxis sehr leicht möglich ist, während starre Messer direkt auf den Kopf des Bodenverdrängungshammers in dieser Hinsicht erhebliche Probleme bereiten.

**Patentansprüche**

1. Pneumatisches Rohraufweitungsgerät zum Aufbrechen und Verdrücken alter Metallrohre (18) ins umgebende Erdreich in Form eines durch das Altrohr (18) zu ziehenden, mit einer konischen Spitze (2) mit einem vorlaufend angeordneten Rohrschneidgerät mit wenigstens einer Schneide (10,11) versehenen zylindrischen Bodenverdrängungshammers (1) mit vibrierend schlagendem Meißelkopf und einer an einem im Durchmesser verbreiterten rückwärtigen Abschnitt (4) angeordneten rückwärtigen Halterungsvorrichtung (5) für ein einzuziehendes Schutzrohr oder ein neues Versorgungsrohr dadurch gekennzeichnet, daß das Schneidgerät als gegenüber dem Bodenverdrängungshammer (1) verkürzter zylindrischer die Schneiden (10, 11) tragender Schneidekaliber (7) ausgebildet ist, dessen Durchmesser kleiner ist als der Durchmesser des verbreiterten rückwärtigen Abschnitts (4) und der über eine zug- und druckfeste Gelenkverbindung (22) mit der konischen Spitze (2) des Bodenverdrängungshammers (1) verbunden ist.

2. Pneumatisches Rohraufweitungsgerät nach Anspruch 1, dadurch gekennzeichnet, daß die Gelenkverbindung (22) als Kardangelenk ausgebildet ist.

3. Pneumatisches Rohraufweitungsgerät nach Anspruch 1 oder 2, dadurch gekennzeichnet, daß der Schneidekaliber (7) mit einer rückwärtigen Platte (19) in einen von einem Spannstift (21) durchsetzten Schlitz (20) der konischen Spitze (2) des Bodenverdrängungshammers (1) einragt.

4. Pneumatisches Rohraufweitungsgerät nach Anspruch 3, dadurch gekennzeichnet, daß die Bohrung der Platte (19) etwas größer ist als der Durchmesser des Spannstiftes (21).

5. Pneumatisches Rohraufweitungsgerät nach einem der Ansprüche 1 bis 4, dadurch gekennzeichnet, daß der Schneidekaliber (7) eine konische mit einem Schlitz (15) und Zugseilquerbolzen (16) versehende Führungsspitze (14) aufweist.

6. Pneumatisches Rohraufweitungsgerät nach einem der Ansprüche 1 bis 5, gekennzeichnet durch eine einen Schlitz (8) des Schneidekalibers (7) durchsetzende mittels Querspannstiften (12, 13) verankerte Messerplatte (9).

**Claims**

1. Pneumatic pipe-expanding device for breaking open and crushing old metal pipes (18) into the surrounding earth, having the form of a cylindrical soil displacement hammer (1) to be pulled through the old pipe (18), the hammer being provided with a conical tip (2), a pipe cutter mounted at the leading end, and at least one cutting edge (10, 11) and with a vibrating, percussive chisel head and a rear mount (5) located on a rear section (4) with a wider diameter for a protective pipe or new supply pipe to be pulled through, characterised in that the cutter is formed as a cylindrical cutting calibre (7) carrying the cutting edges (10, 11) and being shorter than the soil displacement hammer (1), the diameter of said calibre being smaller than the diameter of the wider rear section (4) and the calibre itself being connected to the conical tip (2) of the soil displacement hammer (1) via a traction-resistant and pressure-resistant hinge joint (22).

2. Pneumatic pipe-expanding device according to claim 1, characterised in that the hinge joint 122) is formed as a Cardan joint.

3. Pneumatic pipe-expanding device according to claim 1 or 2, characterised in that a rear plate (19) of the cutting calibre (7) projects into a slot (20) in the conical tip (2) of the soil displacement hammer (1) penetrated by a dowel pin (21).

4. Pneumatic pipe-expanding device according to claim 3, characterised in that the bore in the plate (19) is slightly larger than the diameter of the dowel pin (21).

5. Pneumatic pipe-expanding device according to one of claims 1 to 4, characterised in that the cutting calibre (7) has a conical guide tip (14) provided with a slot (15) and traction cable bolts (16).

6. Pneumatic pipe-expanding device according to one of claims 1 to 5, characterised by a blade plate (9) penetrating a slot (8) in the cutting calibre (7) and anchored by means of transverse dowel pins (12, 13).

**Revendications**

1. Appareil pneumatique d'élargissement de tubes servant à ouvrir à force et repousser de vieux tubes métalliques (18) dans le sol environnant sous la forme d'un marteau cylindrique (1) de refoulement du sol, qui doit être tiré à l'intérieur du vieux tube (18) et est pourvu d'une pointe conique (2) équipée d'un appareil de sectionnement du tube disposé en avant de cette pointe et comportant au moins un tranchant (10,11), le marteau comportant une tête de burin réalisant une frappe vibratoire, et un dispositif de support arrière (5) disposé dans une section arrière (4) dont le diamètre est élargi, pour un tube de protection devant être inséré par traction, ou pour un nouveau tube d'alimentation, caractérisé en ce que l'appareil de coupe est agencé sous la forme d'un calibre cylindrique de coupe (7) qui est plus court que le marteau (1) de refoulement du sol et porte les tranchants (10,11) et dont le diamètre est inférieur au diamètre de la section arrière élargie (4) et qui est raccordé, par l'intermédiaire d'une liaison articulée (22) résistante à la traction et à la pression, à la pointe conique (2) du marteau (1) de refoulement du sol.

2. Appareil pneumatique d'élargissement de tubes selon la revendication 1, caractérisé en ce que la liaison articulée (22) est réalisée sous la forme d'une articulation à la cardan.

3. Appareil d'élargissement pneumatique de tubes selon la revendication 1 ou 2, caractérisé en ce que le calibre de coupe (7) pénètre par une plaque arrière (19) dans une fente (20) traversée par une goupille de serrage (21), de la pointe conique (2) du marteau (1) de refoulement du sol.

4. Appareil pneumatique d'élargissement de tubes selon la revendication 3, caractérisé en ce que le perçage de la plaque (19) est d'une taille légèrement supérieure au diamètre de la goupille de serrage (21).

5. Appareil pneumatique d'élargissement de tubes selon l'une des revendications 1 à 4, caractérisé en ce que le calibre de coupe (7) possède une pointe conique de guidage (14) pourvue d'une fente (15) et d'un boulon transversal (16) de raccordement d'un câble de traction.

6. Appareil pneumatique d'élargissement de tubes selon l'une des revendications 1 à 5, caractérisé par une plaque porte-couteaux (9) qui traverse une fente (8) du calibre de coupe (7) et est ancrée au moyen de goupilles de serrage transversales (12,13).

**FIG. 1**

**FIG. 2**